(19) Europäisches Patentamt
European Patent Office
Office européen des brevets

(11) Veröffentlichungsnummer : **0 493 400 B1**

(12) # EUROPÄISCHE PATENTSCHRIFT

(45) Veröffentlichungstag der Patentschrift :
**09.03.94 Patentblatt 94/10**

(51) Int. Cl.$^5$ : **A01N 25/34,** E04B 1/72

(21) Anmeldenummer : **90912677.3**

(22) Anmeldetag : **24.08.90**

(86) Internationale Anmeldenummer :
**PCT/EP90/01421**

(87) Internationale Veröffentlichungsnummer :
**WO 91/03939 04.04.91 Gazette 91/08**

(54) **VORBEUGENDER MATERIALSCHUTZ GEGENÜBER IM BODEN LEBENDEN SCHÄDLINGEN.**

(30) Priorität : **20.09.89 DE 3931303**

(43) Veröffentlichungstag der Anmeldung :
**08.07.92 Patentblatt 92/28**

(45) Bekanntmachung des Hinweises auf die Patenterteilung :
**09.03.94 Patentblatt 94/10**

(84) Benannte Vertragsstaaten :
**AT BE CH DE DK ES FR GB IT LI LU NL SE**

(56) Entgegenhaltungen :
**US-A- 4 103 450**
**US-A- 4 823 520**
**Journal of Economic Entomology, Band 50, Nr. 5, Oktober 1957, Walter Ebeling et al.: "Relation of particle size to the penetration of subterranean termites through barriers of sand or cinders", Seiten 690-692, Seieh Seite 690, rechte Spalte, Zeile 29 bis Seite 691, linke Spalte, Zeile 10, Seite 691, rechte Spalte, Zeile 13 bis Seite 692, linke Spalte, Zeile 31**

(56) Entgegenhaltungen :
**Chemical Patents Index, Basic Abstracts Journal, week 8725, 19 August 1987, Sectin C, AGDOC, Derwent Publications Ltd., (London, GB), see no. 87-172889/25 & JP, A, 52103001 (SHAKUTANIA); 13 May 1987**
**Chemical Patent Index, Documentation Abstracts, Journal, C Agrochemicals, week 8917, 21 June 1989, Derwent Publications Ltd., (London, GB), see no. 89-125489/17 & JP, A, 1070405 (HIRAOKA ORIZOME KK.), 15 March 1989**

(73) Patentinhaber : **DESOWAG Materialschutz GmbH**
**Postfach 32 02 20, Rossstrasse 76**
**D-40417 Düsseldorf (DE)**

(72) Erfinder : **METZNER, Wolfgang**
**Windmühlenstrasse 53**
**D-4150 Krefeld (DE)**
Erfinder : **PALLASKE, Michael**
**Adolf-Kolping-Strasse 22**
**D-4152 Kempen 1 (DE)**
Erfinder : **WEGEN, Hans-Werner**
**Niessenstrasse 25**
**D-4150 Krefeld (DE)**

(74) Vertreter : **Lauer, Dieter, Dr. et al**
**c/o Solvay Deutschland GmbH**
**Hans-Böckler-Allee 20**
**D-30173 Hannover (DE)**

EP 0 493 400 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum vorbeugenden Materialschutz gegenüber ständig und/oder temporär im Boden lebenden Schädlingen, insbesondere Termiten.

Termiten gehören in den tropischen und subtropischen Regionen zu den wirtschaftlich bedeutendsten Holzzerstörern. Nahezu alle holzzerstörenden Termiten zählen zu den niederen Termitenarten, die ihre Nester im Erdboden anlegen. Von diesen Nestern ausgehend graben die Tiere unterirdische Gänge, bis sie an Holz oder ein anderes zellulosehaltiges Material gelangen, das als Nahrung geeignet ist. Termiten verursachen also zum einen Schäden durch Fraß an verbautem Holz und zum anderen zerstören sie auf der Suche nach geeigneter Nahrung eine Vielzahl anderer Materialien, die sie bei dieser Tätigkeit behindern. Die Verhinderung von Termitenschäden erfolgte bisher durch termitizide Ausstattung des zu schützenden Materials, indem der termitizide Wirkstoff auf das zu schützende Material aufgetragen oder in das zu schützende Material eingebracht wurde.

In Journal of Economic Entomology, Bd. 50, Nr. 5, Seiten 690-692, Oktober 1957 und US-A-4823 520 werden als Termitenschutz Sperrschichten aus Sand, Schlackenpulver oder vulkanisierter Asche um den zu schützenden Gegenstand angeordnet.

Aufgabe der vorliegenden Erfindung war es, ein Verfahren zu entwickeln, mit dessen Hilfe die Annäherung von ständig und/oder temporär im Boden lebenden Schädlingen, insbesondere Termiten, an den zu schützenden Gegenstand noch wirksamer verhindert wird.

Diese Aufgabe wird erfindungsgemäß dadurch gelöst, daß um und/oder in dem zu schützenden Gegenstand eine oder mehrere Sperrschichten aus scharfkantigen inerten Teilchen aus Glassplittern, Glasteilchen oder Glasdiamantine mit einer Teilchengröße von 0,5 bis 1,15 mm Siebung (gemessen nach DIN 4188) und/oder kugelförmigen inerten Teilchen mit einem Durchmesser von 1,0 bis 3,0 mm angeordnet werden, wobei die Glassplitter, Glasflitter, Glasdiamantine oder Glaskugeln als Trägermaterial für darauf aufgebrachte Pyrethroide als insektizide Wirkstoffe, vorzugsweise Cyano-(4-fluoro-3-phenoxyphenyl)-methyl-3-(2,2-dichloro-ethenyl)-2,2-dimethylcyclopropancarboxylat, allein oder in Kombination mit anderen insektiziden Wirkstoffen verwendet werden.

Bei dem erfindungsgemäßen Verfahren werden primär die speziellen mechanischen Eigenschaftengenutzt, die in einer Sperrschicht aus scharfkantigen, inerten Teilchen (z.B. Glassplitter) herrschen. Bedingt durch die scharfen Partikelkanten weist diese Schüttung eine hohe innere Reibung auf; die Einzelteilchen sind untereinander stark verkeilt und lassen sich daher durch die im Boden lebenden Schädlinge, insbesondere Termiten, nur schwer aus dem Gefüge herauslösen. Die Herauslösung einzelner Teilchen wird durch ihre glatten Bruchflächen (geringe Haftreibung beim Ergreifen) weiter erschwert. Wird zusätzlich die durchschnittliche Teilchengröße des Sperrschichtmaterials so gewählt, daß die Lückenräume in der Schüttung kleiner sind als der Körperdurchmesser der Schädlinge, wird die Sperrschicht für diese Tiere undurchdringbar.

Als Pyrethroide können außer dem vorzugsweise verwendeten Cyano-(4-fluoro-3-phenoxyphenyl)-methyl-3-(2,2-dichlorothenyl)-2,2-dimethylcyclopropancarboxylat (Cyfluthrin), Pyrethroide wie Permethrin, Fenfluthrin, Decamethrin oder Cypermethrin als insektizide Wirkstoffe eingesetzt werden.

Die Pyrethroide können teilweise durch andere insektizide Wirkstoffe wie insektizide Carbamate, beispielsweise o-Isopropoxyphenyl-N-methyl-carbamat und/oder o-sec-Butylphenyl-N-methyl-carbamat, insektizide Phosphorsäureester, Phosphonsäureester, Thiophosphorsäureester, Dithiophosphorsäureester oder insektizide Thionophosphorsäureester, vorzugsweise insektizide halogenierte oder halogengruppenfreie Thionophosphorsäureeester der Formel

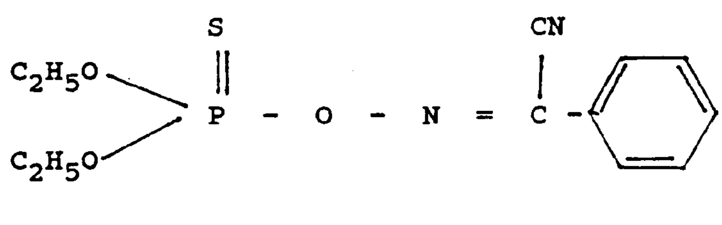

vorzugsweise (Diäthoxy-thiophosphoryloxyimino)-phenylacetonitril bzw. 0,0-Diäthyl-O-(cyan-benzylidenamino) thionophosphat und/oder (Diäthoxythiophosphoryloxyimino)-2-Chlorphenylacetonitril und/oder andere Phosphorsäureester, vorzugsweise Dimethoxy-O-(6-nitro-m-tolyl)-phosphorothioat, ersetzt werden. Diese insektiziden Wirkstoffe können auch allein auf dem Trägermaterial aufgebracht werden.

Nach einer vorteilhaften Ausführungsform des erfindungsgemäßen Verfahrens werden eine oder mehrere Sperrschichten aus scharfkantigen Teilchen eines Gemisches aus zwei oder mehreren Teilchengrößen von

0,001 bis 30 mm Siebung (gemessen nach DIN 4188), vorzugsweise von 0,5 bis 1,15 mm Siebung (gemessen nach DIN 4188) um und/oder in dem zu schützenden Gegenstand angeordnet.

Nach einer besonderen Ausführungsform werden eine oder mehrere Sperrschichten aus kugelförmigen inerten Teilchen eines Gemisches aus zwei oder mehreren Kugeldurchmessern von 0,5 bis 5,0 mm, vorzugsweise von 1,0 bis 3,0 mm, um und/oder in dem zu schützenden Gegenstand angeordnet.

Gemäß einer weiteren Ausführungsform des erfindungsgemäßen Verfahrens werden eine oder mehrere Sperrschichten aus einem Gemisch von scharfkantigen inerten Teilchen mit einer Teilchengröße von 0,56 bis 1,5 mm Siebung (gemessen nach DIN 4188) und kugelförmigen inerten Teilchen mit einem Durchmesser von 0,56 bis 3,0 mm um und/oder in dem zu schützenden Gegenstand angeordnet.

Gemäß einer bevorzugten Ausführungsform des erfindungsgemäßen Verfahrens werden ein oder mehrere Sperrschichten aus Glassplittern, Glasmehl, Glasflittern oder Glasdiamantine als scharfkantige inerte Teilchen und/oder Glaskugeln als kugelförmige inerte Teilchen um und/oder in dem zu schützenden Gegenstand angeordnet.

Gemäß einer zweckmäßigen Ausführungsform des erfindungsgemäßen Verfahrens werden eine oder mehrere Sperrschichten mit einer Dicke von 1 bis 100 cm, vorzugsweise von 10 bis 50 cm, aus den scharfkantigen und/oder kugelförmigen inerten Teilchen um den zu schützenden Gegenstand angeordnet.

Gemäß einer besonderen Ausführungsform werden eine oder mehrere Sperrschichten aus den scharfkantigen und/oder kugelförmigen inerten Teilchen in Mischung mit einem Trägermaterial um und/oder in dem zu schützenden Gegenstand angeordnet.

Die Sperrschichten aus scharfkantigen und/oder kugelförmigen inerten Teilchen können gleichzeitig als Trägermaterial für auf diese Teilchen aufgebrachte herbizide und/oder fungizide Wirkstoffe. Durch die herbiziden und fungiziden Wirkstoffe wird eine Verletzung der Sperrschichten durch Wurzelwachstum oder Pilzwachstum verhindert.

Als fungizide Wirkstoffe, die auf dem Trägermaterial aufgebracht werden, können 1-Trityl-1,2,4-triazol der allgemeinen Formel

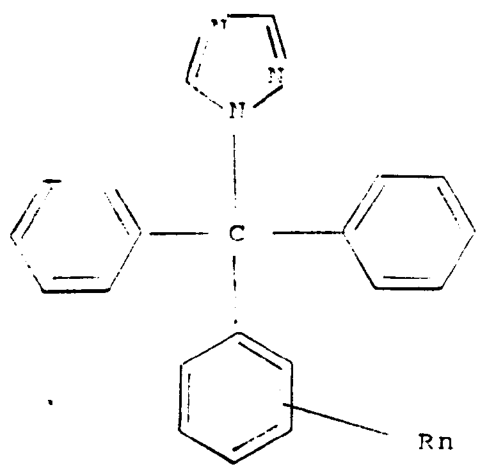

in welcher R für ein Fluor-, Chlor- oder Bromatom, eine Tri-fluormethyl-, Nitro- oder Cyanogruppe oder eine Alkylgruppe mit bis zu 4 Kohlenstoffatomen und n für die Zahlen 1 oder 2 steht, sowie deren Salze von organischen oder anorganischen Säuren, eine (N-Cyclohexyldiazeniumdioxy)-metallverbindung bzw. ein Salz des N-Nitroso-N-cyclohexylhydroxylamins, vorzugsweise deren Aluminiumverbindung, 2,5-Dimethyl-N-cyclohexyl-N-methoxy-3-furan-carbonsäureamid, N,N-Dimethyl-N'-phenyl-N'(fluordi chlormethylthio)-sulfamid, N,N-Dimethyl-N'-p-tolyl-N'-(dichlorfluormethylthio)-sulfamid, oder ein Gemisch zwei oder mehreren dieser Verbindungen, tetravalente, fungizide zinnorganische Verbindungen wie Tributyl-zinnbenzoat, Tris (tributylzinn)phosphat, Bis-(tri-butylzinn)oxid, Tributylzinnaphthenat, Tributylzinnoctoat sowie quaternäre Ammoniumsalze wie Arylalkylammoniumverbindungen, vorzugsweise eine Trialkylarylammoniumverbindung wie Benzyldimethyl (C10 - C16)alkyl-ammoniumchlorid eingesetzt werden.

Die erfindungsgemäßen Sperrschichten werden um den zu schützenden Gegenstand im und/oder auf dem Erdboden und/oder in dem zu schützenden Gegenstand angeordnet.

Die bevorzugte Anwendung des erfindungsgemäßen Verfahrens mit scharfkantigen Glasteilchen als inertem Sperrschichtmaterial führte gegenüber Termiten der Art Reticulitermes santonensis (de Feytaud) und Heterotermes indicola (Wasmann) zu folgenden Ergebnissen:

A. Penetrationsvermögen in scharfkantigem Sperrschichtmaterial

Eine Sperrschicht kann von Termiten auf zweierlei Art durchwandert werden: erstens durch Abtragen von Teilchen und zweitens durch das Lückensystem zwischen den Teilchen. Die Penetration kann nur unterbunden werden, wenn die Teilchen einerseits zu groß zum Abtransport sind, andererseits aber so klein, daß die Termiten nicht zwischen ihnen hindurchkommen.

Die Prüfung der Sperrschichten gegen Termitenpenetration erfolgte in enger Anlehnung an DIN EN 117. Der dort vorgeschriebene Versuchsaufbau wurde wie folgt modifiziert: auf die Erde im Prüfgefäß wurde ein 70 mm langes Glasrohr (55 mm Durchmesser) aufgesetzt. In dieses Glasrohr wurde das zu prüfende Sperrschichtmaterial eingefüllt (50 mm Schüttungshöhe). Auf das Sperrschichtmaterial wurde ein Stück Holz aufgelegt, das (durch Pilzbefall) hochattraktiv für die Termiten war. Anschließend wurde das Glasrohr oben verschlossen, der einzige Weg an das Holz führte durch die Schüttung.

Eine Sperrschicht aus scharfkantigem Material weist eine hohe innere Reibung auf; die Einzelteilchen sind stark ineinander verklemmt und lassen sich nur schwer aus dem Verbund herauslösen. Zur Bestimmung des Einflusses der inneren Reibung auf das Penetrationsvermögen von Termiten durch Sperrschichten wurden solche aus Glassplittern von unterschiedlicher Teilchengröße untersucht.

Die hohe Wirksamkeit von Sperrschichten aus scharfkantigem Material zeigen die Abbildungen 1 und 2, die das Penetrationsvermögen von Termiten der Art Reticulitermes santonensis (Abb. 1) und der Art Heterotermes indicola (Abb. 2) durch Sperrschichten aus Glassplittern in Abhängigkeit von der verwendeten Partikelgröße (Siebung) zeigen. Sperrschichten aus scharfkantigem Material werden bis zu einer Partikelgröße 0,56 mm weder von Heterotermes indicola nach von Reticulitermes santonensis durchdrungen.

B. Penetrationsvermögen in abgerundetem Sperrschichtmaterial

Die Prüfung wurde gemäß DIN EN 117 (modifiziert) durchgeführt. Die Ergebnisse der Untersuchungen zeigen, daß aus Glaskugeln bestehendes Sperrschichtmaterial mit Kugeldurchmessern von 0,4 bis 0,9 mm durch Abtragen penetriert werden kann; Glaskugeln mit Durchmessern zwischen 1,0 und 3,0 mm unterbinden jedoch Termitenpenetration (Reticulitermes santonensis), siehe Abb. 3, vollständig. Ab 2,5 mm Durchmesser finden sehr kleine Termitenarten (Heterotermes indicola) bereits den Weg durch das Lückensystem im Sperrmaterial, siehe Abb. 4.

C. Penetrationsvermögen in gemischtem Sperrschichtmaterial

Im Rahmen der erfindungsgemäßen Verhinderung von Termitenpenetration durch Sperrschichten ist weiter von Interesse, wie sich Mischungen von scharfkantigen und kugelförmigen inerten Teilchen als Sperrschichten auf das Penetrationsvermögen auswirken. Die Untersuchungen wurden mit Schüttungen aus Mischungen von kugelförmigem Material (Glaskugeln von 0,56 bis 3,0 mm Durchmesser) und scharfkantigem Material (Glassplittern von 0,56 bis 1,5 mm Siebung) gemäß DIN EN 117 (modifiziert, siehe A.) durchgeführt.

Diese Versuche zeigten, daß alle Mischungen sowohl die Penetration von Heterotermes indicola als auch die von Reticulitermes santonensis erfolgreich verhindern konnten (Eindringtiefe in das Sperrschicht-material max. 2 mm).

D. Penetrationsvermögen in insektizid ausgerüstetem Sperrschichtmaterial

Gemäß einer besonderen Ausführungsform des erfindungsgemäßen Verfahrens kann das Sperrschichtmaterial zusätzlich mit insektiziden Wirkstoffen ausgestattet werden. Bei der Verwendung von Glas als Sperrschichtmaterial können hier synthetische Pyrethroide aufgrund ihrer hohen Affinität zu Glasoberflächen vorteilhaft eingesetzt werden. Die zusätzliche Ausstattung von Sperrschichten aus Glasmaterial mit synthetischen Pyrethroiden erweist sich in sowohl in umwelthygienischer Hinsicht als auch im Hinblick auf die Beständigkeit dieser Insektizide im Boden als vorteilhaft:

- die Wirkstoffe werden nicht mehr direkt der Erde untermischt und so die Gefahr der Kontamination von Oberflächengewässern stark reduziert;
- bedingt durch die hohe Affinität zu Glasoberflächen wird die Auswaschung des Wirkstoffes drastisch herabgesetzt und so die Umweltbelastung allgemein reduziert;
- durch die neutralen Verhältnisse im Inneren der Sperrschicht wird die Wirksamkeitsdauer der Pyrethroide speziell in alkalischer Umgebung stark verlängert;
- durch das Fehlen von organischem Material im Inneren der Sperrschicht wird der mikrobielle Abbau der

Pyrethroide stark verzögert und deren Wirksamkeitsdauer weiter gesteigert.

Sperrschichten, die gemäß dieser besonderen Ausführungsform errichtet wurden, kombinieren also vorteilhaft mechanischen mit chemischem Schutz bei gleichzeitiger Reduktion der Umweltbelastungen durch Termitenschutzmaßnahmen.

Es wurde daher die kontaktinsektizide Wirksamkeit von Glassplittern (Teilchengröße von 0,56 - 1,15 mm Siebung) geprüft, die kurzzeitig in eine pyrethroidhaltige Lösung (0,1 % Cyfluthrin in Aceton) getaucht wurden; 24 Stunden nach dem Tauchen (vollständiges Abdampfen des Lösungsmittels) wurden jeweils 50 Termiten auf die Glassplitterschüttung aufgesetzt und im Abstand von 30 Minuten die Mortalität bestimmt.

Ansatz I : Tauchzeit 2 Minuten
Ansatz II : Tauchzeit 3 Minuten
Ansatz III : Tauchzeit 4 Minuten

Prüftier: Heterotermes indicola

Prüfung 24 Stunden nach dem Tauchen:

Ansatz I : 100 % Mortalität nach weniger als 30 Minuten
Ansatz II : 100 % Mortalität nach weniger als 30 Minuten
Ansatz III : 100 % Mortalität nach weniger als 30 Minuten

Prüfung nach Auswaschbeanspruchung (7 Tage unter Wasser, täglich ein vollständiger Wasserwechsel):

Ansatz I : 100 % Mortalität nach weniger als 30 Minuten
Ansatz II : 100 % Mortalität nach weniger als 30 Minuten
Ansatz III : 100 % Mortalität nach weniger als 30 Minuten

Prüftier: Reticulitermes santonensis

Prüfung 24 Stunden nach dem Tauchen:

Ansatz I : 100 % Mortalität nach weniger als 30 Minuten
Ansatz II : 100 % Mortalität nach weniger als 30 Minuten
Ansatz III : 100 % Mortalität nach weniger als 30 Minuten

Prüfung nach Auswaschbeanspruchung (7 Tage unter Wasser, täglich ein vollständiger Wasserwechsel):

Ansatz I : 100 % Mortalität nach weniger als 30 Minuten
Ansatz II : 100 % Mortalität nach weniger als 30 Minuten
Ansatz III : 100 % Mortalität nach weniger als 30 Minuten

Diese Ergebnisse zeigen, daß Sperrschichtmaterial aus Glas, vorzugsweise in Form von scharfkantigem Glasmaterial, vorteilhaft als Trägersubstanz für termitizide Wirkstoffe, insbesondere aus der Gruppe der synthetischen Pyrethroide, geeignet ist.

E. Penetrationsvermögen in Sperrschichtmaterial aus einer Mischung von scharfkantigen inerten Teilchen und einem Trägermaterial

Die Prüfungen wurden mit einem Kabelisoliermaterial aus Weich-Polyvinylchlorid, das nicht termitenfest ist, durchgeführt. Die als inerte Teilchen verwendeten Glasteilchen werden in verschiedenen Volumenverhältnissen mit dem aufgeschmolzenen Weich-Polyvinylchlorid, das als Trägermaterial dient, vermischt und das Gemisch abkühlen gelassen. Aus dem Prüfmaterial wurden 2 mm dicke Scheiben angefertigt und gemäß DIN EN 117 (modifiziert) geprüft.

Ansatz I : Glassplitter (Korngröße 0,56 - 1,15 mm)
Ansatz II : Glasdiamantine (Korngröße 0,8 mm)
Ansatz III : Glasdiamantine (Korngröße 0,42 mm)

Mischungsverhältnis in Volumenteile Partikel / Volumenteile Weich-PVC

Prüftier: Heterotermes indicola

| | Mischung | Bewertung | |
|---|---|---|---|
| Ansatz I | 80 / 20 | oberflächlicher Schabefraß | 0,5 mm |
| | 50 / 50 | oberflächlicher Schabefraß | 0,5 mm |
| Ansatz II | 80 / 20 | oberflächlicher Schabefraß | 0,5 mm |
| | 50 / 50 | oberflächlicher Schabefraß | 0,5 mm |
| | 20 / 80 | oberflächlicher Schabefraß | 0,5 mm |
| Ansatz III | 80 / 20 | oberflächlicher Schabefraß | 0,5 mm |
| | 50 / 50 | oberflächlicher Schabefraß | 0,5 mm |
| | 20 / 80 | oberflächlicher Schabefraß | 0,5 mm |

Prüftier: Reticulitermes santonensis

| | Mischung | Bewertung | |
|---|---|---|---|
| Ansatz I | 80 / 20 | oberflächlicher Schabefraß | 0,5 mm |
| | 50 / 50 | oberflächlicher Schabefraß | 0,5 mm |
| | 20 / 80 | oberflächlicher Schabefraß | 0,5 mm |
| Ansatz II | 80 / 20 | oberflächlicher Schabefraß | 0,5 mm |
| | 50 / 50 | oberflächlicher Schabefraß | 0,5 mm |
| | 20 / 80 | oberflächlicher Schabefraß | 0,5 mm |
| Ansatz III | 80 / 20 | oberflächlicher Schabefraß | 0,5 mm |
| | 50 / 50 | oberflächlicher Schabefraß | 0,5 mm |
| | 20 / 80 | oberflächlicher Schabefraß | 0,5 mm |

Diese Ergebnisse zeigen, daß nicht-termitenfestes WeichPolyvinylchlorid durch den erfindungsgemäßen Einbau einer Sperrschicht aus Glasteilchen termitenfest gemacht werden kann. Es ist daher insbesondere als vorbeugender Schutz gegenüber im Boden lebenden Schädlingen für erdverlegte Leitungen oder Kabel geeignet, indem es als separates Sperrschicht-Hüllenmaterial um diese Leitungen oder Kabel angeordnet wird oder in diesen Leitungen oder Kabeln einen integralen Bestandteil des Leitungs- oder Kabelmaterials selbst als Sperrschichtmaterial bildet.

**Patentansprüche**

1. Verfahren zum vorbeugenden Materialschutz gegenüber ständig und/oder temporär im Boden lebenden Schädlingen, insbesondere Termiten, durch Anbringen einer Sperrschicht um und/oder in dem zu schützenden Gegenstand, dadurch gekennzeichnet, daß eine oder mehrere Sperrschichten aus scharfkantigen inerten Teilchen aus Glassplittern, Glasflittern oder Glasdiamantine mit einer Teilchengröße von 0,5 bis 1,15 mm Siebung (gemessen nach DIN 4188) und/oder kugelförmigen inerten Teilchen aus Glaskugeln mit einem Durchmesser von 1,0 bis 3,0 mm um und/oder in dem zu schützenden Gegenstand angeordnet werden, wobei die Glassplitter, Glasflitter, Glasdiamantine oder Glaskugeln als Trägermaterial für darauf aufgebrachte Pyrethroide als insektizide Wirkstoffe, vorzugsweise Cyano-(4-fluoro-3-phenoxyphenyl)-methyl-3-(2,2-dichloroethenyl)-2,2-dimethylcyclopropancarboxylat, allein oder in Kombination mit anderen insektiziden Wirkstoffen verwendet werden.

2. Verfahren nach Anspruch 1, dadurch gekennzeichnet, daß eine oder mehrere Sperrschichten aus scharfkantigen inerten Teilchen eines Gemisches aus Glassplittern, Glasflittern oder Glasdiamantine mit zwei oder mehreren Teilchengrößen von 0,5 bis 1,15 mm Siebung (gemessen nach DIN 4188) um und/oder in dem zu schützenden Gegenstand angeordnet werden.

3. Verfahren nach Anspruch 1, dadurch gekennzeichnet, daß eine oder mehrere Sperrschichten aus kugelförmigen inerten Teilchen eines Gemisches aus Glaskugeln mit zwei oder mehreren Kugeldurchmessern von 0,5 bis 5,0 mm, vorzugsweise von 1,0 bis 3,0 mm um und/oder in dem zu schützenden Gegenstand angeordnet werden.

4. Verfahren nach Anspruch 1, dadurch gekennzeichnet, daß eine oder mehrere Sperrschichten aus einem Gemisch der scharfkantigen inerten Teilchen aus Glassplittern, Glasflittern oder Glasdiamantine mit einer Teilchengröße von 0,56 bis 1,5 mm Siebung (gemessen nach DIN 4188) und der kugelförmigen inerten Teilchen aus Glaskugeln mit einem Durchmesser von 0,56 bis 3,0 mm um und/oder in dem zu schützenden Gegenstand angeordnet werden.

5. Verfahren nach einem der Ansprüche 1 bis 4, dadurch gekennzeichnet, daß eine oder mehrere Sperrschichten mit einer Dicke von 10 bis 50 cm aus den Glassplittern, Glasflittern, Glasdiamantine oder Glaskugeln um oder in dem zu schützenden Gegenstand angeordnet werden.

6. Verfahren nach einem oder mehreren der Ansprüche 1 bis 4, dadurch gekennzeichnet, daß eine oder mehrere Sperrschichten aus den Glassplittern, Glasflittern, Glasdiamantine und/oder Glaskugeln in Mischung mit einem Trägermaterial um und/oder in dem zu schützenden Gegenstand angeordnet werden.

7. Anwendung des Verfahrens gemäß Ansprüchen 1 bis 6 zum vorbeugenden Schutz von Gegenständen aus Holz, Kunststoff, erdverlegten Leitungen oder Kabeln und Isolatoren.

## Claims

1. A method for the preventive protection of material from pests living permanently and/or temporarily in soil, in particular termites, by the application of a barrier layer around and/or in the object to be protected, characterised in that one or more barrier layers consisting of sharp-edged inert particles of glass splinters, glass frost or glass diamantine having a particle size of 0.5 to 1.15 mm sizing (measured in accordance with DIN 4188) and/or spherical inert particles of glass spheres having a diameter of 1.0 to 3.0 mm are arranged around and/or in the object to be protected, the glass splinters, glass frost, glass diamantine or glass spheres being used as carrier material for pyrethroids applied thereto as insecticidal active substances, preferably cyano-(4-fluoro-3-phenoxyphenyl)-methyl-3-(2,2-dichloroethenyl)-2,2-dimethylcyclopropane carboxylate, alone or in combination with other insecticidal active substances.

2. A method according to Claim 1, characterised in that one or more barrier layers consisting of sharpedged inert particles of a mixture of glass splinters, glass frost or glass diamantine having two or more particle sizes of 0.5 to 1.15 mm sizing (measured in accordance with DIN 4188) are arranged around and/or in the object to be protected.

3. A method according to Claim 1, characterised in that one or more barrier layers consisting of spherical inert particles of a mixture of glass spheres having two or more sphere diameters of 0.5 to 5.0 mm, preferably 1.0 to 3.0 mm, are arranged around and/or in the object to be protected.

4. A method according to Claim 1, characterised in that one or more barrier layers consisting of a mixture

of the sharp-edged inert particles of glass splinters, glass frost or glass diamantine having a particle size of 0.56 to 1.5 mm sizing (measured in accordance with DIN 4188) and of the spherical inert particles of glass spheres having a diameter of 0.56 to 3.0 mm are arranged around and/or in the object to be protected.

**5.** A method according to one of Claims 1 to 4, characterised in that one or more barrier layers having a thickness of 10 to 50 cm consisting of the glass splinters, glass frost, glass diamantine or glass spheres are arranged around or in the object to be protected.

**6.** A method according to one or more of Claims 1 to 4, characterised in that one or more barrier layers of the glass splinters, glass frost, glass diamantine and/or glass spheres mixed with a carrier material are arranged around and/or in the object to be protected.

**7.** The application of the method according to Claims 1 to 6 for the preventive protection of objects made of wood, plastic, underground pipes or cables and insulators.

## Revendications

**1.** Procédé de protection préventive de matériaux contre des parasites vivant constamment et/ou temporairement dans le sol, en particulier des termites, par application d'une couche isolante autour de l'objet à protéger et/ou dans cet objet à protéger, caractérisé en ce qu'on dispose, autour de l'objet à protéger et/ou dans cet objet, une ou plusieurs couches isolantes formées de particules inertes à arêtes vives en débris de verres, en paillettes ou éclats de verre ou en strass ayant une grosseur de particules correspondant à un passage par des tamis de 0,5 à 1,15 mm d'ouverture de maille (mesure effectuée selon la norme DIN 4188) et/ou en particules inertes en forme de sphères constituées par des billes de verre ayant un diamètre de 1,3 à 3,à mm, les débris de verre, les paillettes, les éléments de strasse ou des billes de verre servant de matériau de support pour des pyréthroïdes appliqués sur ce matériau de support, et servant de substance à action insecticide, avantageusement du cyano-(4-fluoro-3-phénoxyphényl)-méthyl-3-(2,2-dichloroéthényl)-2,2-diméthylcyclopropane carboxylate, isolément ou en combinaison avec d'autres substances actives insecticides.

**2.** Procédé selon la revendication 1, caractérisé en ce qu'on dispose, autour de l'objet à protéger et/ou dans cet objet, une ou plusieurs couches isolantes formée(s) de particules inertes à arêtes vives d'un mélange de débris de verre, de paillettes de verre ou de strass ayant deux ou plusieurs grosseurs de particules allant de 0,5 à 1,15 mm (mesure par tamisage selon la norme DIN 4188).

**3.** Procédé selon la revendication 1, caractérisé en ce qu'on dispose,autour de l'objet à protéger et/ou dans cet objet, une ou plusieurs couches isolantes formée(s) de particules inertes en forme de billes d'un mélange de billes de verre comportant deux ou plusieurs diamètres de bille allant de 0,5 à 5,0 mm, avantageuseusement de 1,0 à 3,0 mm .

**4.** Procédé selon la revendication 1, caractérisé en ce qu'on dispose, autour de l'objet à protéger et/ou dans cet objet, une ou plusieurs couches isolantes formée(s) d'un mélange de particules inertes à arêtes tranchantes de débris de verre, de paillettes de verre ou de strass en verre, ayant une grosseur de particules de 0,56 à 1,5 mm (mesure par tamisage selon la norme DIN 4188) et de particules inertes en forme de sphères formées de billes de verre ayant un diamètre de 0,56 à 3,00 mm .

**5.** Procédé selon l'une des revendications 1 à 4, caractérisé en ce qu'on dispose, autour de l'objet à protéger ou dans cet objet, une ou plusieurs couches isolante(s) ayant une épaisseur de 10 à 50 cm, couche(s) formée(s) de débris de verre, de paillettes de verre ou de strass ou de billes de verre.

**6.** Procédé selon l'une ou plusieurs des revendications 1 à 4, caractérisé en ce qu'on dispose, autour de l'objet à protéger ou dans cet objet, une ou plusieurs couches isolantes formée(s) par des débris de verre, des paillettes de verre, du strass de verre et/ou des billes de verre en mélange avec une matière de support.

**7.** Utilisation du procédé selon les revendications 1 à 6 pour la protection préventive d'objets en bois, en une matière plastique, de conducteurs ou de câbles ou d'isolateurs enfouis dans la terre.

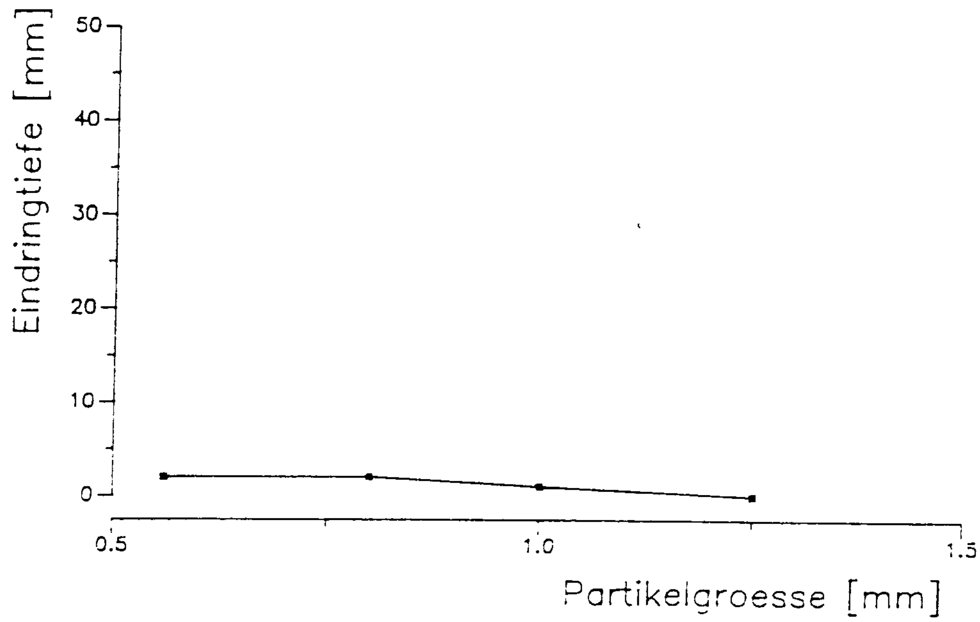


ABBILDUNG 1.)

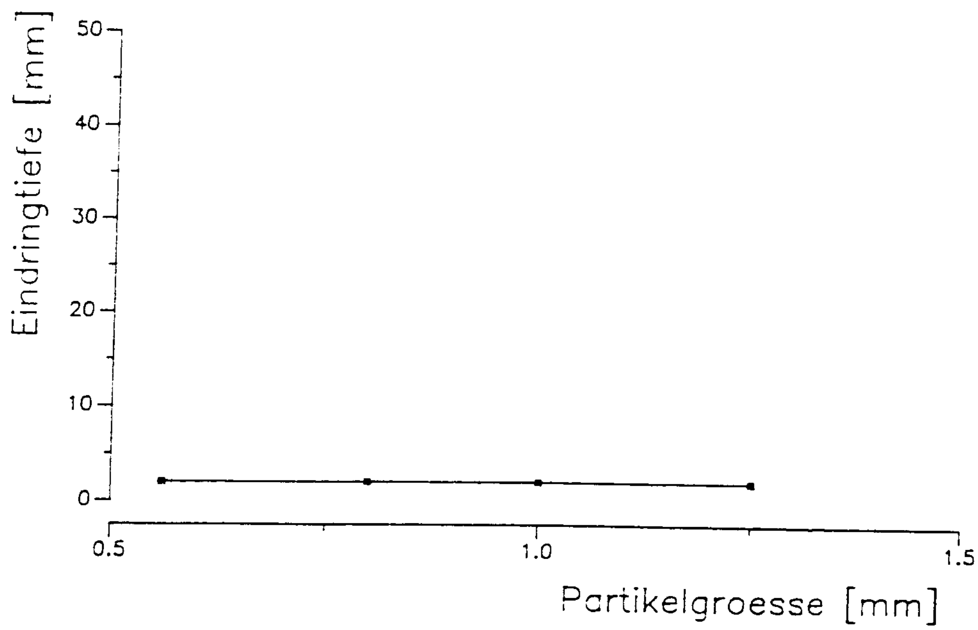


ABBILDUNG 2.)

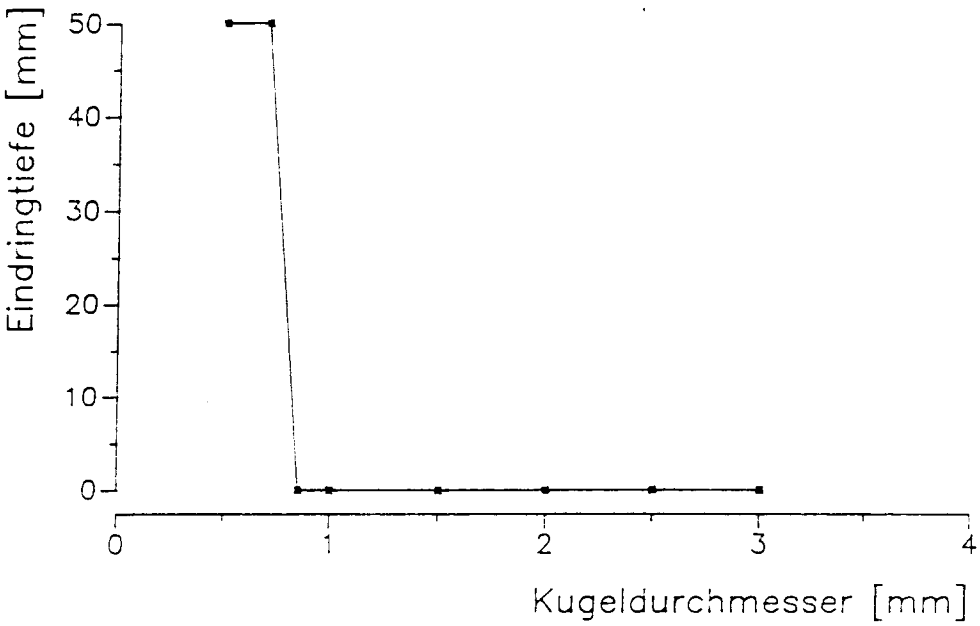


ABBILDUNG 3.)

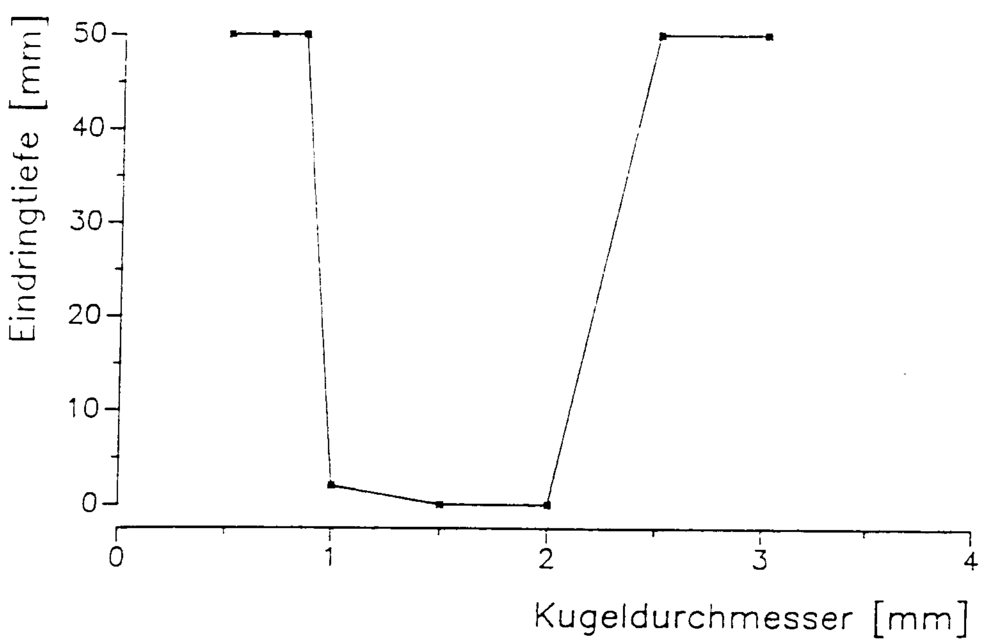


ABBILDUNG 4.)